# EUROPÄISCHE PATENTSCHRIFT

(11) **EP 3 109 198 B1**
(45) Veröffentlichungstag und Bekanntmachung des Hinweises auf die Patenterteilung: **06.07.2022**
(21) Anmeldenummer: 16176345.3
(22) Anmeldetag: 27.06.2016
(51) Int. Cl.: B67C 3/22, F24F 3/16

(54) **BEHÄLTNISBEHANDLUNGSANLAGE MIT STERILRAUM UND FLÜSSIGKEITSABFÜHRUNG AUS DIESEM STERILRAUM**
CONTAINER PROCESSING ASSEMBLY WITH CLEAN ROOM AND LIQUID DISCHARGE FROM THIS CLEAN ROOM
INSTALLATION DE TRAITEMENT DE RÉCIPIENT AVEC UNE SALLE PROPRE ET ÉVACUATION DE LIQUIDE DE CETTE SALLE PROPRE

(30) Priorität: 25.06.2015 DE 102015110214
(43) Veröffentlichungstag der Anmeldung: 28.12.2016
(73) Patentinhaber: Krones AG, 93073 Neutraubling (DE)
(72) Erfinder: Wagner, Martin, 93073 Neutraubling (DE); Dreger, Kai-Uwe, 93073 Neutraubling (DE)
(74) Vertreter: Bittner, Bernhard

(56) Entgegenhaltungen:
- EP-A2- 2 409 948
- WO-A1-2005/003018
- DE-A1-102009 054 314
- DE-A1-102010 064 585
- DE-A1-102011 016 760
- US-A1- 2013 106 027

## Beschreibung

Die vorliegende Erfindung bezieht sich auf eine Behältnisbehandlungsanlage. Aus dem Stand der Technik sind unterschiedlichste Behältnisbehandlungsanlagen bekannt, wie beispielsweise Füllmaschinen, Etikettiermaschinen oder auch Blasformmaschinen, welche Kunststoffvorformlinge zu Kunststoffbehältnissen umformen bzw. blasen. Die hier beschriebene Erfindung ist grundzusätzlich auf jegliche dieser Maschinen anwendbar, insbesondere wenn diese unter Sterilraumbedingungen arbeiten.

Kunststoffbehältnisse werden in der Regel zunächst in Blasmaschinen geblasen und anschließend in einem Füller mit Produkt befüllt. Eine aus dem internen Stand der Technik der Anmelderin bekannte neuartige Produktgruppe beschäftigt sich derzeit mit dem Blasen und Füllen der Behältnisse auf einer einzigen Maschine. Hierbei wird das Behältnis zunächst wie in einer klassischen Blasmaschine durch einen Blasvorgang und insbesondere einen Streckblasvorgang eines Kunststoffvorformlings (Preform) in einer Blasform hergestellt. Im Anschluss wird das so hergestellte Behältnis mit einer Flüssigkeit, insbesondere Schriftart: Nicht Fett, Schriftfarbe: Automatisch dem Produkt, wie etwa einem Getränk, befüllt. Anschließend wird das befüllte Behältnis der Blasform entnommen. Dabei ist es auch denkbar, dass dieser Füllprozess mit einem Unterdruck unterstützt wird. Auch ist es möglich, dass das Behältnis hydraulisch bzw. direkt mit dem Produkt ausgeformt wird.

Die US 2013/106027 A1 zeigt ein System zum gleichzeitigen Formen und Füllen eines Behälters mit einem Formhohlraum, der eine Innenfläche definiert und zur Aufnahme einer Vorform geeignet ist. Das System umfasst ein Servodrucksystem mit einem Einlass und einem Auslass, die betätigt werden können. um ein Fluid, wie z.B. einen flüssigen Rohstoff. auszugeben. und eine Blasdüse, die das Fluid von der Servodruckquelle empfängt und das Fluid mit einem Druck in den Vorformling überträgt, wodurch der Vorformling gezwungen wird, sich in Richtung der Innenfläche des Formhohlraums auszudehnen und einen resultierenden Behälter zu erzeugen, wobei das Fluid als Endprodukt in dem Behälter verbleibt und wobei das Servodrucksystem und die Blasdüse das Fluid mit einer Rate ausgeben, die ausreicht, um den Behälter in weniger als etwa 0.5 Sekunden vollständig zu formen und zu füllen. **Damit zeigt die** US 2013/106027 **eine Vorrichtung gemäß dem Oberbegriff des Anspruchs 1.** Die EP Schriftart: 11 Pt. 409 948 A2 zeigt eine Schriftart: (Standard) Arial, 11 Pt. Vorrichtung. welche mehrere Füllelemente, die eine Austragseinheit zum Einfüllen der Flüssigkeit in die Behälter und eine Ventileinheit zur Steuerung der Zufuhr der Flüssigkeit in die Behälter aufweiset. Es ist eine Transporteinheit vorgesehen, die die Behälter temporär während des Befüllens mit der Flüssigkeit entlang eines vorgegebenen Transportweges transportiert.

Dabei weist die Vorrichtung einen Reinraum auf und das wenigstens eine Füllelement ist derart gestaltet. dass das Reinigungsedium während des Reinigungsbetriebs in diesen Reinraum austritt. Insbesondere für Ausgestaltungen mit Reinraum ist die Erfindung besonders geeignet. da auf diese Weise Verschmutzungen durch Spritzer vermieden werden. da das Reinigungsmedium zunächst in den Reinraum tritt. Vorteilhaft ist der Reinraum abgesehen von Zuführ- und Abführeinrichtungen für die Behältnisse im Wesentlichen abgeschlossen.

Durch die vorgesehene Kombination aus Blasen des Behältnisses und dessen Befüllen kann es beispielsweise durch ein übergeschwapptes oder geplatztes Behältnis dazu kommen, dass sich Flüssigkeit im Bereich der Blas- und Formfüllstationen ansammelt, wodurch hygienische und optische Probleme auftreten können.

Auch in anderen Behältnisbehandlungsmaschinen kann es durch das Herabtropfen von Flüssigkeit zu entsprechenden Verschmutzungen kommen, die insbesondere bei sterilen Anwendung störend sind.

Manche Getränke erfordern sterile Behandlungsschritte wie etwa ein steriles Abfüllen. Besonders bei solchen Getränken sind Verschmutzungen, insbesondere innerhalb eines Reinraums, als besonders problematisch anzusehen.

Der vorliegenden Erfindung liegt daher die Aufgabe zu Grunde, die Hygiene derartiger Maschinen zu verbessern. Insbesondere sollen auch Probleme durch ein Auslaufen oder Verspritzen von Flüssigkeit, insbesondere innerhalb eines Reinraums, vermieden werden.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Behandeln von Behältnissen weist einen beweglichen Träger auf, an dem wenigstens eine Behandlungsstation zum Behandeln der Behältnisse angeordnet ist. Dabei wird die Behandlungsstation entlang eines vorgegebenen Transportpfades transportiert. Weiterhin weist die Vorrichtung einen Reinraum auf, innerhalb dessen die Kunststoffvorformlinge behandelt werden, wobei dieser Reinraum mittels wenigstens einer Wandung gegenüber einer unsterilen Umgebung abgegrenzt ist. Bei der unsterilen Umgebung kann es sich beispielsweise um den Raum handeln, in dem die entsprechende Vorrichtung steht, der Begriff unsterile Umgebung bezieht sich jedoch allgemein auch auf solche Umgebungen, welche gegenüber dem eigentlichen Sterilraum ein geringeres Sterilitätsniveau aufweisen, etwa sog. Grauräume.

Erfindungsgemäß ist wenigstens eine Wandung des Reinraums wenigstens abschnittsweise gegenüber einer horizontalen Ebene geneigt, derart, dass eine Flüssigkeit entlang dieser Wandung aus dem Reinraum ausleitbar ist. Erfindungsgemäß handelt es sich bei dem beweglichen Träger um einen drehbaren Träger. Vorteilhaft sind an diesem Träger mehrere Behandlungsstationen angeordnet. Weiter erfindungsgemäß weist die Vorrichtung auch mehrere Wandungen auf, welche jeweils den besagten Reinraum abgrenzen. Zudem ist die Flüssigkeit erfindungsgemäß daher auch mittels der besagten Wandung aus dem Reinraum ausleitbar.

Vorteilhaft dient die geneigte Wandung wenigstens abschnittsweise zum Führen und/oder Leiten der besagten Flüssigkeit. Alternativ oder zusätzlich kann (insbesondere im Inneren des Reinraums) auch ein Flüssigkeitsleitelement vorgesehen sein, entlang dessen die besagte Flüssigkeit aufgrund ihrer Schwerkraft abfließt. Bei einer weiteren vorteilhaften Ausführungsform kann es sich bei derjenigen Wandung, welche gegenüber der horizontalen Ebene geneigt ist, um eine den Reinraum begrenzende Wandung handeln. Es wäre jedoch auch möglich, dass insbesondere im Inneren des Reinraums eine weitere Wandung ausgebildet ist, die geneigt ist zum Zweck des Ableitens von Flüssigkeit innerhalb des Reinraums.

Erfindungsgemäß handelt es sich bei dem beweglichen Träger um einen drehbaren Träger. Bevorzugt ist an diesem Träger einer Vielzahl von Behandlungsstationen angeordnet. Erfindungsgemäß ist der Reinraum wenigstens abschnittsweise torusförmig um den Transportpfad der Kunststoffbehältnisse ausgebildet. Weiter Erfindungsgemäß sind mehrere Wände zur Abgrenzung des Reinraums vorgesehen. Bevorzugt wird durch den durch diese Wände gebildeten Innenraum der Reinraum ausgebildet. Erfindungsgemäß weist die Vorrichtung eine Ableiteinrichtung auf, um Flüssigkeit aus dem Reinraum abzuleiten. Weiter erfindungsgemäß ist dabei an einer tiefergelegenen Position dieses Reinraums einer Bodenwandung eine Öffnung vorgesehen und/oder ein Rohr oder eine Leitung vorgesehen, über welche Flüssigkeit aus dem Reinraum treten kann.

Es wird daher vorgeschlagen, dass ein schräger Bodenbereich vorgesehen ist, der so gestaltet ist, dass Produktreste, insbesondere flüssige Produktreste ablaufen können und insbesondere in einen Sammelkanal ablaufen können. Auf diese Weise ist einerseits ein Ablaufen von Produktresten durch übergeschwappte oder geplatzte Behälter möglich und andererseits auch eine automatische Reinigung des Reinraums.

Bevorzugt weist die Vorrichtung eine Sammeleinrichtung zum Sammeln des aus dem Reinraum abgeleiteten oder des aus dem Reinraum abzuleitenden flüssigen Mediums auf. Vorteilhaft ist dabei diese Sammeleinrichtung außerhalb des besagten Reinraums angeordnet. Schriftart: Nicht Fett, Schriftfarbe: Automatisch Bei dieser Sammeleinrichtung kann es sich beispielsweise um ein Behältnis oder auch um einen ringförmigen Kanal handeln.

Schriftart: Nicht Fett, Schriftfarbe: Automatisch Es kann jedoch auch bereits innerhalb des Reinraums eine derartige Sammeleinrichtung vorgesehen sein, etwa in Form eines Kanals, welche die von der Schrägfläche weitergeleitete Flüssigkeit sammelt.

Bei einer weiteren nicht erfindungsgemäßen Ausführungsform weist die Vorrichtung wenigstens eine Einrichtung zum Beaufschlagen der Behältnisse mit einem gasförmigen Medium und/oder wenigstens eine Einrichtung zum Befüllen der Behältnisse mit einem flüssigen Medium auf. Nicht erfindungsgemäß ist sowohl eine Einrichtung zum Beaufschlagen der Behältnisse mit einem gasförmigen Medium als auch eine Einrichtung zum Befüllen der Behältnisse mit einem flüssigen Medium vorgesehen. Nicht erfindungsgemäß weist jede Behandlungseinheit sowohl eine Einrichtung zum Beaufschlagen der Kunststoffvorformlinge mit dem gasförmigen Medium als auch eine Einrichtung zum Befüllen der Behältnisse auf. Damit handelt es sich vorteilhaft um eine Streckblasmaschine bzw. um eine Blasmaschine, welche mit einer Füllfunktion ausgestattet ist oder um eine sogenannte Formfüllmaschine. Bei einer erfindungsgemäßen Formfüllmaschine werden Kunststoffvorformlinge unmittelbar mit dem abzufüllenden Produkt gefüllt und dadurch expandiert. Bei einer weiteren vorteilhaften Ausführungsform weist die Behandlungsstation ein Füllelement zum Befüllen der Behältnisse und ein Beaufschlagungselement zum Beaufschlagen der Behältnisse mit einem gasförmigen Medium auf. Vorteilhaft weist die Behandlungsstation auch eine Reckstange auf. Vorteilhaft weist die Behandlungsstation auch eine Form, insbesondere eine Blasform auf, die einen Hohlraum ausbildet, innerhalb dessen der Kunststoffvorformling expandiert wird. Dabei erfolgt diese Expansion des Kunststoffvorformlings durch Befüllung mit einem Füllgut

Bei einer weiteren vorteilhaften Ausführungsform weist die Vorrichtung eine Druckerzeugungseinrichtung auf, um in dem Reinraum einen Überdruck gegenüber der unsterilen Umgebung zu erzeugen. Erfindungsgemäß weist die Vorrichtung eine Gassperreinrichtung auf, welche verhindert, dass über die Ableiteinrichtung ein gasförmiges Medium (z.B. unsterile Luft) in den Reinraum gelangt. So kann es beispielsweise zwar ermöglicht werden, dass eine Flüssigkeit aus dem Reinraum über die Ableiteinrichtung abgeführt wird, gleichwohl verhindert jedoch die Sperreinrichtung, dass über die Ableiteinrichtung ein gasförmiges Medium in die Vorrichtung gelangt. So kann beispielsweise bei einem ortsfesten Reinraum, beispielsweise bei Taktmaschinen, über eine Rohrleitung der Sammelkanal entleert werden. Dabei kann diese Rohrleitung als Siphon ausgebildet sein, falls in dem Reinraum ein bestimmter Überdruck aufrecht erhalten werden muss. Es wäre jedoch auch möglich, dass über die Ableiteinrichtung ein steriles Medium, beispielsweise sterile Luft in den Reinraum gelangen kann.

Schriftart: Nicht Fett, Schriftfarbe: Automatisch Vorteilhaft ist in dem Reinraum ein Sammelkanal angeordnet, in dem sich ablaufende Flüssigkeit sammeln kann. Auch dieser Sammelkanal kann dabei schräg bezüglich einer horizontalen Ebene verlaufen, sodass Flüssigkeit in den Sammelkanal, beispielsweise in Richtung einer Ablassöffnung, gelangen kann.

Die siphonartige Ausgestaltung eines Ablaufrohrs kann als Gassperreinrichtung dienen, falls sich in diesem Siphon beispielsweise Flüssigkeit sammeln kann, die so den Durchtritt von Gas verhindert. Bei Rundläufermaschinen könnte der besagte Sammelkanal beispielsweise über einen Ringkanal entleert werden. Dieser Ringkanal kann dabei Bestandteil eines Wasserschlosses sein.

Vorteilhaft ist daher die Gassperreinrichtung als Siphon oder als Wasserschloss ausgebildet. Bei Verwendung eines Wasserschlosses ist ein Teil der den Reinraum begrenzenden Wandung stationär angeordnet und ein anderer Teil dreht sich. Der Kanal, der Bestandteil des Wasserschlosses ist, kann sich dabei ebenfalls drehen oder dieser kann stehen. Ebenfalls greift bevorzugt eine Wandung des jeweils anderen (drehenden oder stehenden Teils) in diesen Kanal ein und auf diese Weise wird eine Wassersperre erreicht.

Insbesondere falls ein Wasserschloss vorgesehen ist, könnte zusätzlich zu diesem Wasserschloss auch eine Entleerungseinrichtung vorgesehen sein, beispielsweise über Rohr und/oder eine (insbesondere ringförmige oder kreisförmige) Auffangwanne. Daneben könnte eine Reinigungseinrichtung zum Reinigen des Reinraums vorgesehen sein, wie etwa eine aus dem Stand der Technik an sich bekannte CIP - Reinigungseinrichtung. So könnten beispielsweise mehrere in dem Reinraum platzierte Düsen vorgesehen sein, um eine automatische Reinigung des Reinraums und oder von Bestandteilen der einzelnen Behandlungsstationen wie etwa der Blasformen zu erreichen Weiterhin kann die Vorrichtung mehrere Wasserschlösser aufweisen, beispielsweise zwei Wasserschlösser, um den Reinraum gegenüber der Umgebung abzuschirmen. Bevorzugt weist daher der Reinraum wenigstens zwei bezüglich einander beweglichen Wandung auf, wobei jede dieser Wandungen den Reinraum begrenzt.

Bei einer weiteren vorteilhaften Ausführungsform ist wenigstens eine Behandlungsstation schräg gegenüber einer vertikalen Richtung ausgerichtet. Dies bedeutet, dass bevorzugt bei dieser Behandlungsstation auch das zu expandierende bzw. zu befüllende Behältnis schräg angeordnet ist. In diesem Falle verläuft daher insbesondere eine Längsrichtung der zu behandelnden Kunststoffvorformlinge schräg gegenüber einer vertikalen Richtung. Auch könnte bei einer derartigen Vorrichtung die oben erwähnte Reckstange in einer zwar geradlinigen jedoch schrägen Bewegung bewegt werden. Bei einer weiteren vorteilhaften Ausführungsform könnte die Neigung eines Wandungsbereiches einen Neigungswinkel schräg angeordneter Blas- bzw. Formfüllstation angepasst werden, um auf diese Weise eine optimale Raumausnutzung zu erreichen. So wäre es möglich, dass die Neigung der besagten Wandung um nicht mehr als 20%, bevorzugt um nicht mehr als 10% von der Neigung der Behandlungsstation abweicht.

Bevorzugt ist die Wandung und/oder allgemein die Ableiteinrichtung zum Ableiten des flüssigen Mediums in einem Winkel gegenüber einer horizontalen Ebene geneigt, der größer ist als 10°, bevorzugt größer als 20°, bevorzugt größer als 30°. Bevorzugt ist dieser Winkel kleiner als 80°, bevorzugt kleiner als 70° und besonders bevorzugt kleiner als 60°. Bei einer weiteren vorteilhaften Ausführungsform ist ein Bodenbereich des Reinraums vorteilhaft in radialer Richtung nach außen hin fallend ausgeführt, sodass bevorzugt der Ablauf von Flüssigkeit durch die Zentrifugalkraft (im Arbeitsbetrieb der Vorrichtung) unterstützt wird. Die vorliegende Erfindung ist weiterhin auf ein Verfahren zum Behandeln von Behältnissen mittels einer hier beschriebenen Vorrichtung gerichtet, wobei die Behältnisse mittels Behandlungsstationen entlang eines vorgegebenen Transportpfads bewegt werden und während dieses Transports in vorgegebener Weise behandelt werden, und wobei die Behältnisse während ihrer Behandlung wenigstens zeitweise innerhalb eines Reinraums transportiert werden, wobei dieser Reinraum mittels wenigstens einer Wandung gegenüber einer unsterilen Umgebung abgegrenzt wird. Vorteilhaft wird wenigstens zeitweise eine Flüssigkeit aus diesem Reinraum ausgeleitet. Insbesondere handelt es sich dabei um Flüssigkeit, welche ungewollt innerhalb des Reinraums ausläuft, beispielsweise um Produkt, welches versehentlich nicht in das zu befüllende Behältnis abgefüllt wurde. Bevorzugt wird innerhalb des Reinraums verspritzte Flüssigkeit abgeleitet, also insbesondere Flüssigkeit, die nicht bestimmungsgemäß in das Behältnis gelangt oder bei der es sich um Spülflüssigkeit zum Spülen und/oder Reinigen des Reinraums handelt.

Vorteilhaft weist die Vorrichtung Reinraumelemente bzw. Beaufschlagungseinrichtungen auf, welche einen Innenraum des Reinraums zu dessen Reinigung mit einer Reinigungsflüssigkeit oder auch mit einem Sterilisationsmittel beaufschlagen.

Vorteilhaft wird die Flüssigkeit über eine Schrägfläche wenigstens einer Wandung abgeleitet. Vorteilhaft handelt es sich hierbei um eine Wandung, welche den Reinraum begrenzt.

Erfindungsgemäß werden innerhalb des Reinraums die Behältnisse sowohl expandiert als auch befüllt. Bevorzugt werden daher die Behältnisse oder entsprechende Kunststoffvorformlinge mit einem gasförmigen Medium beaufschlagt. Auch werden diese Kunststoffvorformlinge mit einer Flüssigkeit befüllt. Dabei ist es erfindungsgemäß dass durch das Befüllen mit der Flüssigkeit auch eine Expansion des Kunststoffvorformlings einhergeht bzw. das Behältnis mittels der abzufüllenden Flüssigkeit auch expandiert wird.

Weitere Vorteile und Ausführungsformen ergeben sich aus den beigefügten Zeichnungen. Darin zeigen:
- Fig. 1: eine schematische Darstellung einer erfindungsgemäßen Vorrichtung zum Umformen von Kunststoffvorformlingen zu Kunststoffbehältnissen;
- Fig. 2: eine schematische Schnittdarstellung einer erfindungsgemäßen Vorrichtung in einer ersten Ausführungsform;
- Fig. 3: eine schematische Schnittdarstellung einer erfindungsgemäßen Vorrichtung in einer zweiten Ausführungsform;
- Fig. 4: eine weitere schematische Darstellung einer erfindungsgemäßen Vorrichtung; und
- Fig. 5: eine weitere schematische Darstellung einer erfindungsgemäßen Vorrichtung.

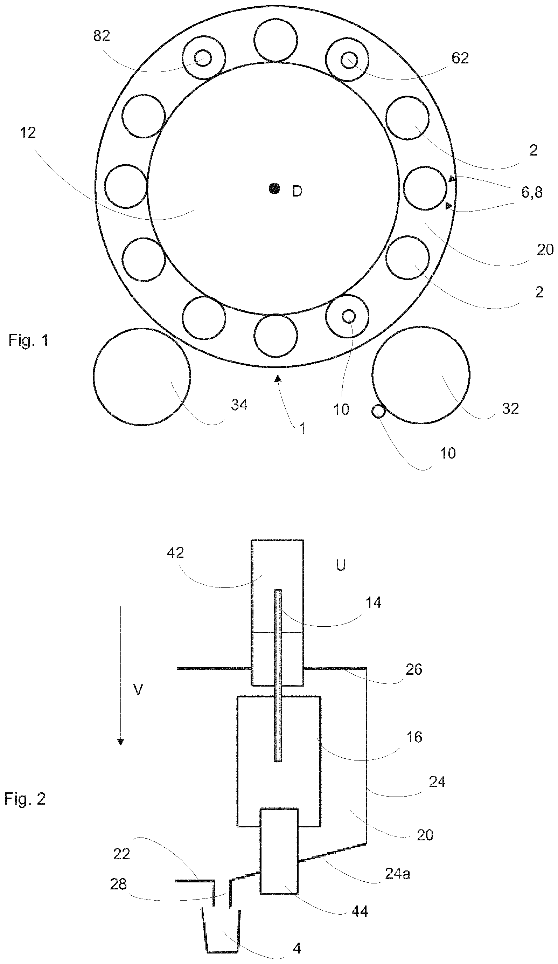

Figur 1 zeigt eine schematische Darstellung einer erfindungsgemäßen Vorrichtung 1. Diese Vorrichtung weist dabei eine Zuführeinrichtung 32 auf, welche Kunststoffvorformlinge 10 einer Vielzahl von (nur schematisch dargestellten) Umformungsstationen 2 zuführt. Bevorzugt handelt es sich bei dieser Zuführeinrichtung um einen Transportstern, der die Kunststoffvorformlinge 10 den einzelnen Behandlungseinrichtungen 2 zuführt. Bevorzugt handelt es sich um einen sog. Teilungsverzugsstern, der eine Teilung zwischen den einzelnen Kunststoffvorformlingen 10 verändert und insbesondere erhöht.

Das Bezugszeichen 34 kennzeichnet eine Abführvorrichtung, welche expandierte und befüllte Behältnisse wiederum abführt. Auch hier kann es sich wieder um einen Transportstern handeln. Die Vorrichtung weist weiterhin einen um eine Drehachse D drehbaren Träger 12 auf, an dem hier eine Vielzahl von Behandlungsstationen 2 angeordnet ist. Diese Behandlungsstationen weisen dabei jeweils zur Vereinfachung (nur vereinzelt dargestellte) Füllelemente 82 auf sowie Beaufschlagungseinrichtungen 62, welche die Kunststoffvorformlinge 10 zu den Kunststoffbehältnissen expandieren. Nicht erfindungsgemäß können diese Beaufschlagungseinrichtungen beispielsweise sog. Blasdüsen aufweisen, welche an Mündungen der Kunststoffvorformlinge ansetzbar sind, um diese zu deren Expansion mit Blasluft zu beaufschlagen.

Das Bezugszeichen 20 kennzeichnet einen Reinraum, innerhalb dessen die Behandlungsstationen 2 und mit ihnen auch die zu behandelnden Kunststoffbehältnisse transportiert werden. Innerhalb dieses Reinraums 20 können sterile Bedingungen aufrecht erhalten werden. Der Reinraum 20 ist weiterhin mittels wenigstens einer Dichtungseinrichtung gegenüber einer (unsterilen) Umgebung U abgedichtet. Anders als in Fig. 1 gezeigt, kann sich der Reinraum auch noch weiter erstrecken, beispielsweise bis zu einer Verschließeinrichtung, welche die befüllten Behältnisse mit Verschlüssen verschließt.

Das Bezugszeichen 6 bezieht sich in seiner Gesamtheit auf eine Umformungseinrichtung - hier auf eine einzelne Umformungsstation. Das Bezugszeichen 8 kennzeichnet eine Fülleinrichtung, welche die umgeformten Behältnisse befüllt. Diese beiden Einrichtungen 6, 8 sind Bestandteile jeder einzelnen Behandlungsstation 2, wobei in Fig. 1 zur besseren Übersichtlichkeit dies nur an einer Behandlungsstation 2 gezeigt ist.

Bei der in Figur 1 gezeigten Ausgestaltung sind die Umformungseinrichtungen und die Fülleinrichtungen jeweils miteinander kombiniert und nehmen daher beide Funktionen war. Dies kann, wie oben erwähnt, einerseits , aber nicht erfindungsgemäß, dadurch erfolgen, dass die Kunststoffvorformlinge zunächst mittels Druckluft expandiert und anschließend jedoch noch in der Vorrichtung 1 befüllt werden. Erfindungsgemäß erfolgt dies jedoch dadurch, dass die Kunststoffvorformlinge unmittelbar mit dem Füllgut beaufschlagt und damit auch gleichzeitig expandiert werden.

Figur 2 zeigt eine Schnittdarstellung einer erfindungsgemäßen Vorrichtung. Dabei ist hier auch eine Reckstange 14 zu erkennen, die zum Dehnen der nicht gezeigten Kunststoffvorformlinge in ihrer Längsrichtung dient. Das Bezugszeichen 16 kennzeichnet eine (Blas)form, welche ebenfalls Bestandteil der Umformungseinrichtung ist. Diese (Blas)form bildet in ihrem Inneren einen Hohlraum aus, innerhalb dessen die Kunststoffvorformlinge expandiert werden.

Das Bezugszeichen 20 kennzeichnet wiederum den Reinraum, der hier durch wenigstens drei Wände 22, 24 und 26 begrenzt wird. Das Bezugszeichen 44 kennzeichnet einen weiteren Träger für die Blasform. Das Bezugszeichen 42 kennzeichnet eine Antriebseinrichtung zum Bewegen der Reckstangen 14.

Das Bezugszeichen 28 kennzeichnet einen Auslas, der als Ableiteinrichtung fungiert, um ein innerhalb des Reinraums verspritztes Produkt abzuführen. Zu diesem Zweck ist die Wandung 24 schräg angeordnet, sodass das verspritzte Füllgut direkt zu dem Auslass 28 fließen kann. Im Bereich des Auslasses kann auch ein (nicht gezeigter) Kanal innerhalb des Reinraums angeordnet sein, um die von der Wandung 24 abgeleitete Flüssigkeit zu sammeln. Ein derartiger Kanal könnte sich hier kreisförmig bzw. senkrecht zu der Figurenebene erstrecken.

Unterhalb des Auslasses ist eine Sammeleinrichtung 4, wie beispielsweise ein Ringkanal, vorgesehen, der die ausgelassene Flüssigkeit auffängt.

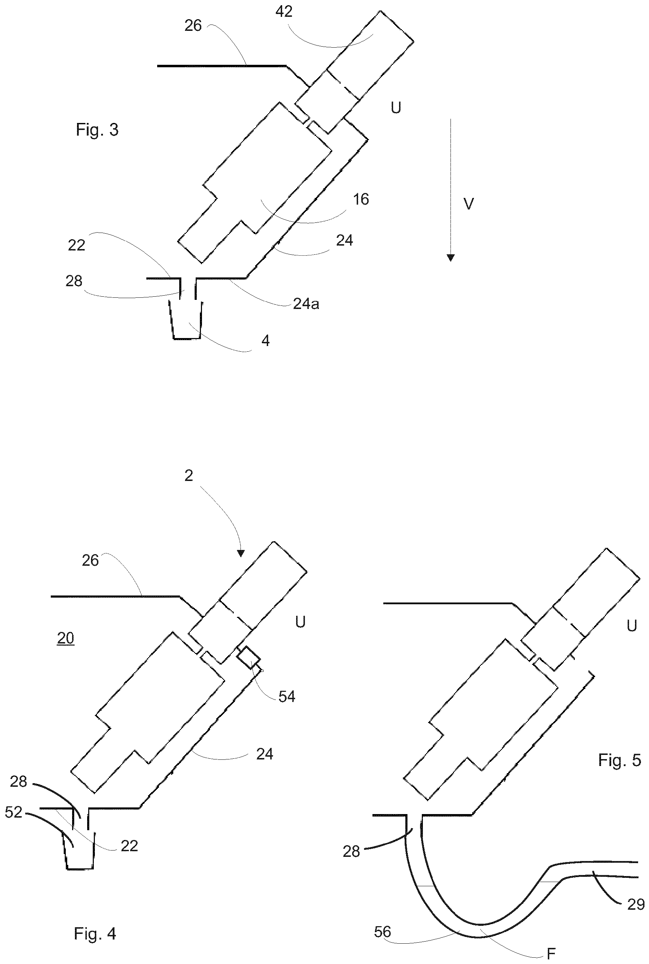

Figur 3 zeigt eine weitere Ausführungsform der erfindungsgemäßen Vorrichtung. Bei dieser Ausführungsform ist die Behandlungsstation 2 schräg gegenüber der vertikalen Richtung V angeordnet. Auch die Wandung 24 ist entsprechend schräg ausgebildet, um auf diese Weise Platz einzusparen. Auch kann über diese schräge Wandung 24 verspritztes Gut in Richtung des Auslasses 28 abfließen. Anders als in Figur 3 gezeigt, könnte auch der Wandungsabschnitt 24a schräg und nach unten zulaufend auf den Auslass 28 angeordnet sein, damit auch hier Flüssigkeit zu der Sammeleinrichtung 4 gelangen kann.

Figur 4 zeigt eine Ausgestaltung, welche insbesondere bei einer kontinuierlich laufenden Maschine Anwendung finden kann. Dabei sind hier zwei Wasserschlösser 52 und 54 vorgesehen, welche die Abdichtung des Reinraums 20 gegenüber der Umgebung U bewirken. Das erste Wasserschloss 52 ist hier zusammenfallend mit dem Auslass 28 angeordnet. Bei der in Figur 4 gezeigten Ausführungsform ist das Wandungselement 24 stationär angeordnet. Die Station 2 gemeinsam mit den Wandungsabschnitten 22, 26 ist drehbeweglich angeordnet. Durch die beiden Wasserschlösser 52 und 54 (jeweils nur schematisch dargestellt) wird, wie oben erwähnt, der Reinraum 20 abgedichtet. Damit wirkt hier insbesondere das Wasserschloss 52 auch als Gassperreinrichtung, welche ein Eintreten von insbesondere unsteriler Luft in den Reinraum verhindert.

Figur 5 zeigt eine weitere Ausführungsform einer erfindungsgemäßen Vorrichtung. Bei dieser Ausführungsform schließt sich bei dem Auslass 28 ein in seiner Gesamtheit mit 56 bezeichneter Siphon an, in dem eine Flüssigkeit F angeordnet ist. Falls nun über den Auslass 28 Flüssigkeit hinzukommt, führt dies dazu, dass ein weiterer Teil der Flüssigkeit nach rechts in Richtung der Auslassleitung 28 austritt. Andererseits kann jedoch kein Gas über den Siphon 56 hinweg austreten. Damit dient der Siphon in dieser Ausgestaltung als Gassperreinrichtung. Diese Anordnung eignet sich insbesondere für sogenannte Taktmaschinen. Es ist darauf hinzuweisen, dass die in den Figuren 4 und 5 gezeigten Ausgestaltungen auch kombiniert werden können mit den Ausgestaltungen aus den Figuren 2 und 3. Dies bedeutet, dass die in Figur 4 und 5 gezeigten Ausgestaltungen auch Anwendung finden können, wenn die Behandlungsstationen 2 vertikal ausgerichtet sind. Das Bezugszeichen 29 bezieht sich auf eine Abführeinrichtung wie etwa ein Abführrohr, über welches Flüssigkeit aus dem Siphon 56 abgeführt werden kann.

### Bezugszeichenliste

- 1: Vorrichtung
- 2: Umformungsstationen / Behandlungsstationen
- 4: Sammeleinrichtung
- 6: Umformungseinrichtung
- 8: Fülleinrichtung
- 10: Kunststoffvorformlinge
- 12: drehbarer Träger
- 14: Reckstangen
- 16: (Blas)form
- 20: Reinraum
- 22, 24, 26: Wandungen
- 24a: Wandungsabschnitt
- 28: Auslass / Ableiteinrichtung
- 29: Abführeinrichtung
- 32: Zuführeinrichtung
- 34: Abführvorrichtung
- 42: Antreibseinrichtung
- 44: weiterer Träger
- 52, 54: Wasserschlösser
- 56: Siphon
- 62: Beaufschlagungselement
- 82: Füllelemente

- D: Drehachse
- V: vertikale Richtung
- U: Umgebung
- F: Flüssigkeit

## Patentansprüche

1. Vorrichtung zum Behandeln von Behältnissen (10) mit einem beweglichen Träger (12), an dem wenigstens eine Behandlungsstation (2) zum Behandeln der Behältnisse (10) angeordnet ist, wobei die Behandlungsstation (2) entlang eines vorgegebenen Transportpfades transportiert wird, und wobei die Vorrichtung (1) einen Reinraum (20) aufweist, innerhalb dessen die Behältnisse (10) durch die Behandlungsstation (2) behandelt werden, und wobei die Behandlungsstation dazu eingerichtet und dafür vorgesehen ist das Behältnis (10) hydraulisch bzw. direkt mit einer Flüssigkeit, als einem abzufüllenden Produkt auszuformen, wobei dieser Reinraum (20) mittels wenigstens einer Wandung (22, 24, 26) gegenüber eine unsterilen Umgebung (U) abgegrenzt ist,
**dadurch gekennzeichnet, dass**
wenigstens eine Wandung des Reinraums (20) wenigstens abschnittsweise gegenüber einer horizontalen Ebene geneigt ist, derart, dass eine Flüssigkeit entlang dieser Wandung aus dem Reinraum ausleitbar ist und an einer tiefergelegenen Position des Reinraums (20) eine Ableiteinrichtung (28) vorgesehen ist, um Flüssigkeit aus dem Reinraum (20) abzuleiten und die Vorrichtung eine Gassperreinrichtung (52, 54, 56) aufweist, welche verhindert, dass über die Ableiteinrichtung (28) ein gasförmiges Medium, insbesondere unsterile Luft in den Reinraum (20) gelangt , wobei die Ableiteinrichtung (28) eine Öffnung und/oder ein Rohr oder eine Leitung an einer Bodenwandung des Reinraums (20) aufweist, über welche die Flüssigkeit aus dem Reinraum tritt. wobei es sich bei dem beweglichen Träger um einen drehbaren Träger handelt. und der Reinraum (20) wenigstens abschnittsweise torusförmig um den Transportpfad der Kunststoffbehältnisse ausgebildet ist. und ferner wobei somit die Vorrichtung mehrere Wände zur Abgrenzung des Reinraums aufweist.

2. Vorrichtung (1) nach wenigstens einem der vorangegangenen Ansprüche,
**dadurch gekennzeichnet, dass**
die Vorrichtung (1) eine Sammeleinrichtung (4) zum Sammeln des aus dem Reinraum (20) abgeleiteten oder des aus dem Reinraum abzuleitenden flüssigen Mediums aufweist.

3. Vorrichtung (1) nach wenigstens einem der vorangegangenen Ansprüche,
**dadurch gekennzeichnet, dass**
die Vorrichtung (1) wenigstens eine Einrichtung (6) zum Beaufschlagen der Behältnisse mit einem gasförmigen Medium und/oder wenigstens eine Einrichtung (8) zum Befüllen der Behältnisse aufweist.

4. Vorrichtung (1) nach wenigstens einem der vorangegangenen Ansprüche,
**dadurch gekennzeichnet, dass**
die Behandlungsstation (2) ein Füllelement (82) zum Befüllen der Behältnisse (10) und ein Beaufschlagungselement (62) zum Beaufschlagen der Behältnisse mit einem gasförmigen Medium aufweist.

5. Vorrichtung (1) nach wenigstens einem der vorangegangenen Ansprüche,
**dadurch gekennzeichnet, dass**
die Vorrichtung eine Druckerzeugungseinrichtung aufweist, um in dem Reinraum (20) einen Überdruck gegenüber der unsterilen Umgebung (U) zu erzeugen.

6. Vorrichtung (1) nach Anspruch 1,
**dadurch gekennzeichnet, dass**
die Gassperreinrichtung (52, 54, 56) als Siphon (56) oder als Wasserschloss- (52, 54) ausgebildet ist.

7. Vorrichtung (1) nach wenigstens einem der vorangegangenen Ansprüche,
**dadurch gekennzeichnet, dass**
wenigstens eine Behandlungsstation (2) schräg gegenüber einer vertikalen Richtung (V) ausgerichtet ist.

8. Verfahren zum Behandeln von Behältnissen mittels einer Vorrichtung nach Anspruch 1. und somit mit einem beweglichen Träger (12), an dem wenigstens eine Behandlungsstation (2) zum Behandeln der Behältnisse (10) angeordnet ist, wobei die Behältnisse (10) mittels Behandlungsstationen (2) entlang eines vorgegebenen Transportpfads bewegt werden und wobei die Behältnisse während ihrer Behandlung wenigstens zeitweise innerhalb eines Reinraums (20) transportiert werden, wobei dieser Reinraum (20) mittels wenigstens einer Wandung (22, 24) gegenüber einer unsterilen Umgebung (U) abgegrenzt wird, wobei Schriftart: (Standard) Calibri wenigstens eine Wandung des Reinraums (20) wenigstens abschnittsweise Einzug: Links: 1,25 cm, Keine Aufzählungen oder Nummerierungen gegenüber einer horizontalen Ebene geneigt ist. derart. dass eine Flüssigkeit entlang dieser Wandung aus dem Reinraum ausleitbar ist. wobei an einer tiefergelegenen Position des Reinraums (20) eine Ableiteinrichtung (28) vorgesehen ist, über welche wenigstens zeitweise die Flüssigkeit aus diesem Reinraum (20) ausgeleitet wird und eine Gassperreinrichtung (52, 54, 56) vorgesehen ist, welche verhindert, dass über die Ableiteinrichtung (28) ein gasförmiges Medium, insbesondere unsterile Luft in den Reinraum (20) gelangt und wobei mittels der Behandlungsstation (2) das Behältnis (10) hydraulisch bzw. direkt mit der Flüssigkeit, also einem Produkt. ausgeformt wird, wobei die Ableiteinrichtung (28) eine Öffnung und/oder ein Rohr oder eine Leitung an einer Bodenwandung des Reinraums (20) aufweist. über welche die Flüssigkeit aus dem Reinraum tritt. wobei es sich bei dem beweglichen Träger um einen drehbaren Träger handelt, und der Reinraum (20) wenigstens abschnittsweise torusförmig um den Transportpfad der Kunststoffbehälinisse ausgebildet ist. und ferner wobei somit die Vorrichtung mehrere Wände zur Abgrenzung des Reinraums aufweist.

## Claims

1. System for handling containers (10) having a movable carrier (12) on which at least one handling station (2) for handling the containers (10) is arranged, wherein the handling station (2) is transported along a predetermined transport path, and wherein the system (1) has a clean room (20) inside which the containers (10) are handled by the handling station (2), and wherein the handling station is suitable and intended to shape the container (10) hydraulically or directly respectively with a liquid as a product to be introduced, wherein this clean room (20) is delimited relative to an unsterile environment (U) by at least one wall (22, 24, 26), **characterised in that**
at least one wall of the clean room (20) is at least in sections inclined relative to a horizontal plane in such a way that a liquid can be led out of the clean room along this wall and a draining device (28) is provided at a lower position of the clean room (20) in order to drain off liquid from the clean room (20) and the system (1) has a gas barrier (52, 54, 56) which prevents a gaseous medium in particular unsterile air from entering the clean room (20) via the draining device (28), wherein the draining device (28) has an opening and/or a pipe or a conduit at a bottom wall of the clean room (20) by means of which liquid exits from the clean room, wherein the movable carrier is a rotatable carrier and the clean room (20) is constructed at least in some sections toroidal around the transport path of the plastic preforms and in addition several walls are provided for delimiting the clean room.

2. Device (1) according to at least one of the preceding claims, **characterised in that**
the system (1) has a collecting device (4) for collecting the liquid medium which is drained off out of the clean room (20) or is to be drained off out of the clean room.

3. Device (1) according to at least one of the preceding claims, **characterised in that**
the system (1) has at least one arrangement (6) for supplying the containers with a gaseous medium and/or at least one arrangement (8) for filling the containers.

4. Device (1) according to at least one of the preceding claims, **characterised in that**
the handling station (2) has a filling element (82) for filling the containers (10) and a supply element (62) for supplying the containers with a gaseous medium.

5. System (1) according to at least one of the preceding claims, **characterised in that**
the system has a pressure generating device in order to generate an overpressure in the clean room (20) relative to the unsterile environment (U).

6. System (1) according to claim 1,
**characterised in that**
the gas barrier (52, 54, 56) is constructed as a siphon (56) or as a water lock (52, 54).

7. System (1) according to at least one of the preceding claims, **characterised in that**
at least one handling station (2) is oriented obliquely relative to a vertical direction (V).

8. Method for handling containers with means of a system according to claim 1 having a movable carrier (12) on which at least one handling station (2) for handling the containers is arranged, wherein the containers (10) are moved by means of handling stations (2) along a predetermined transport path and wherein during handling the containers are transported at least intermittently inside a clean room (20), wherein this clean room (20) is delimited relative to an unsterile environment (U) by at least one wall (22, 24, 26), , wherein a wall of the clean room (20) is at least in sections inclined relative to a horizontal plane in such a way that a liquid can be led out of the clean room along this wall, wherein a draining device (28) is provided at a lower position of the clean room (20), via which the liquid is at least intermittently drained off from the clean room (20) and a gas barrier (52, 54, 56) is provided, which prevents a gaseous medium in particular unsterile air from entering the clean room (20) via the draining device (28) and wherein by means of the handling station (2) the container (10) is shaped hydraulically or directly respectively with the liquid i.e. a product, wherein the draining device (28) has an opening and/or a pipe or a conduit at a bottom wall of the clean room (20) via which the liquid is drained off from the clean room, wherein the movable carrier is a rotatable carrier and the clean room (20) is constructed at least in some sections toroidal around the transport path of the plastic preforms and in addition several walls are provided for delimiting the clean room .

## Revendications

1. Dispositif destiné à traiter des contenants (10) avec un support (12) mobile contre lequel est agencé au moins un poste de traitement (2) pour traiter les contenants (10), dans lequel le poste de traitement (2) est transporté le long d'un chemin de transport prédéfini, et dans lequel le dispositif (1) présente une salle blanche (20), à l'intérieur de laquelle les contenants (10) sont traités par le poste de traitement (2), et dans lequel le poste de traitement est aménagé et prévu pour façonner le contenant (10) afin d'en faire un produit à remplir hydrauliquement ou directement avec un liquide, dans lequel cette salle blanche (20) est délimitée au moyen d'au moins une paroi (22, 24, 26) par rapport à un environnement (U) non stérile,
**caractérisé en ce que**
au moins une paroi de la salle blanche (20) est inclinée au moins par sections par rapport à un plan horizontal de sorte qu'un liquide puisse être guidé hors de la salle blanche le long de cette paroi et un équipement d'évacuation (28) est prévu au niveau d'une position située plus bas de la salle blanche (20) pour évacuer du liquide hors de la salle blanche (20) et le dispositif présente un équipement de barrière au gaz (52, 54, 56), lequel empêche qu'un milieu sous forme de gaz, en particulier un air non stérile, ne parvienne dans la salle blanche (20) via l'équipement d'évacuation (28), dans lequel l'équipement d'évacuation (28) présente une ouverture et/ou un tuyau ou une conduite au niveau d'une paroi de fond de la salle blanche (20), via lequel ou laquelle le liquide sort de la salle blanche, dans lequel le support mobile est un support rotatif et la salle blanche (20) est conçue au moins par sections sous forme torique autour du chemin de transport des contenants en plastique, et dans lequel en outre le dispositif présente ainsi plusieurs parois pour délimiter la salle blanche.

2. Dispositif (1) selon au moins l'une des revendications précédentes, **caractérisé en ce que**
le dispositif (1) présente un équipement de collecte (4) pour collecter le milieu liquide évacué hors de la salle blanche (20) ou celui à évacuer hors de la salle blanche.

3. Dispositif (1) selon au moins l'une des revendications précédentes, **caractérisé en ce que**
le dispositif (1) présente au moins un équipement (6) pour solliciter les contenants avec un milieu sous forme de gaz et/ou au moins un équipement (8) pour remplir les contenants.

4. Dispositif (1) selon au moins l'une des revendications précédentes, **caractérisé en ce que**
le poste de traitement (2) présente un élément de remplissage (82) pour remplir les contenants (10) et un élément de sollicitation (62) pour solliciter les contenants avec un milieu sous forme de gaz.

5. Dispositif (1) selon au moins l'une des revendications précédentes, **caractérisé en ce que**
le dispositif présente un équipement de production de pression pour, dans la salle blanche (20), produire une surpression à l'encontre de l'environnement (U) non stérile.

6. Dispositif (1) selon la revendication 1,
**caractérisé en ce que**
l'équipement de barrière au gaz (52, 54, 56) est conçu en tant que siphon (56) ou en tant que cheminée d'équilibre (52, 54).

7. Dispositif (1) selon au moins l'une des revendications précédentes, **caractérisé en ce que**
au moins un poste de traitement (2) est orienté à l'oblique par rapport à une direction verticale (V).

8. Procédé destiné à traiter des contenants au moyen d'un dispositif selon la revendication 1, et ce faisant avec un support (12) mobile contre lequel est agencé au moins un poste de traitement (2) pour traiter les contenants (10), dans lequel les contenants (10) sont déplacés au moyen de postes de traitement (2) le long d'un chemin de transport prédéfini et dans lequel les contenants sont transportés pendant leur traitement au moins par intermittence à l'intérieur d'une salle blanche (20), dans lequel cette salle blanche (20) est délimitée au moyen d'au moins une paroi (22, 24) par rapport à un environnement (U) non stérile, dans lequel au moins une paroi de la salle blanche (20) est inclinée au moins par sections par rapport à un plan horizontal de sorte qu'un liquide puisse être guidé hors de la salle blanche le long de cette paroi, dans lequel un équipement d'évacuation (28) est prévu au niveau d'une position située plus bas de la salle blanche (20), via lequel le liquide est évacué au moins par intermittence hors de cette salle blanche (20) et un équipement de barrière au gaz (52, 54, 56) est prévu, lequel empêche qu'un milieu sous forme de gaz, en particulier un air non stérile, ne parvienne dans la salle blanche (20) via l'équipement d'évacuation (28) et dans lequel le contenant (10) est façonné au moyen du poste de traitement (2) hydrauliquement ou directement avec le liquide pour en faire un produit, dans lequel l'équipement d'évacuation (28) présente une ouverture et/ou un tuyau ou une conduite au niveau d'une paroi de fond de la salle blanche (20), via lequel ou laquelle le liquide sort de la salle blanche, dans lequel le support mobile est un support rotatif et la salle blanche (20) est conçue au moins par sections sous forme torique autour du chemin de transport des contenants en plastique, et dans lequel en outre le dispositif présente ainsi plusieurs parois pour délimiter la salle blanche.
